# EUROPÄISCHE PATENTSCHRIFT

(11) **EP 2 593 644 B1**
(45) Veröffentlichungstag und Bekanntmachung des Hinweises auf die Patenterteilung: **13.02.2019**
(21) Anmeldenummer: 11743774.9
(22) Anmeldetag: 13.07.2011
(51) Int. Cl.: F01D 11/00

(54) **DICHTELEMENT ZUR DICHTUNG EINES SPALTS**
SEALING ELEMENT FOR SEALING A GAP
ÉLÉMENT D'ÉTANCHÉITÉ POUR ÉTANCHÉIFIER UNE FENTE

(30) Priorität: 13.07.2010 EP 10007222
(43) Veröffentlichungstag der Anmeldung: 22.05.2013
(73) Patentinhaber: Siemens Aktiengesellschaft, 80333 München (DE)
(72) Erfinder: MILAZAR, Mirko, 46049 Oberhausen (DE)
(86) Internationale Anmeldenummer: PCT/EP2011/003495
(87) Internationale Veröffentlichungsnummer: WO 2012/007158

(56) Entgegenhaltungen:
- EP-B1- 0 852 659
- WO-A2-01/55273
- GB-A- 935 356
- GB-A- 2 137 283
- GB-A- 2 195 403
- GB-A- 2 280 935
- US-A1- 2003 082 049

## Beschreibung

Die Erfindung betrifft eine Dichtungsanordnung, umfassend zwei mechanisch oder thermisch gegeneinander bewegliche Bauteile, die einander gegenüberliegend durch einen Spalt voneinander beabstandet sind, wobei in den einander gegenüberliegenden Wänden der Bauteile jeweils eine Bauteilnut vorgesehen ist, in denen zur Dichtung des Spalts ein plattenförmiges Dichtelement angeordnet ist.

In Gasturbinen begrenzen beispielsweise auch Plattformen von Turbinenleitschaufeln den ringförmigen Strömungsweg des das in den Brennkammern der Gasturbine erzeugten Heißgases. Die Plattformen benachbarter Turbinenschaufeln sind dabei spaltbildend nebeneinander angeordnet. Um einen Verlust von Heißgas durch diese Spalte zu verhindern und gleichzeitig damit die Beschädigung von rückseitig angeordneten Trägerbauteilen zu vermeiden, ist es bekannt, die Spalte mit Hilfe eines Dichtelements abzudichten, welches in zwei einander gegenüberliegenden Bauteilnuten sitzt. Eine derartige Dichtungsanordnung ist aus der EP 0 852 659 B1 bekannt. Das daraus bekannte plattenförmige Dichtblech weist an einer Seite eine gezahnte (geriffelte) Oberfläche auf.

Es hat sich gezeigt, dass die so ausgeführten Dichtbleche z.B. bei thermisch gegeneinander stark beweglichen Bauteilen starken Verschleiß erleiden können. Demnach kann die erforderliche Dichtfunktion beeinträchtigt und die Betriebstüchtigkeit des Systems deutlich eingeschränkt werden. Weiter können auch Probleme bei der Montage der bekannten Dichtbleche auftreten, die zu einer unerwünschten Nachbearbeitung führen können.

Aufgabe der Erfindung ist es daher, eine Dichtungsanordnung mit einem langlebigen Dichtelement zur Dichtung eines Spalts anzugeben, welches eine wirksame Dichtung auch bei vergleichsweise großen wärmebedingten Bauteilbewegungen gewährleistet.

Erfindungsgemäß wird die Aufgabe durch eine Dichtungsanordnung gemäß den Merkmalen des Anspruchs 1 gelöst.

Die Erfindung geht von der Erkenntnis aus, dass bei einer bekannten Dichtungsanordnung das darin verwendete Dichtblech eine Zahnung aufweist, dessen Zahnhöhe im Verhältnis zur Gesamtdicke des Dichtblechs zu groß war. Der Zahnträgerabschnitt des Dichtblechs, an dem die Dichtungszähne angeordnet sind, wies somit eine nur unzureichende Materialdicke auf, so dass Verschleiß den bisher relativ dünnen Zahnträgerabschnitt der Dichtbleche unzulässig stark schwächen konnte. Insofern verblieb bei erhöhter mechanischer Beanspruchung aufgrund vergleichsweise großen Verschiebungen der einander gegenüberliegenden Bauteile nur vergleichsweise wenig Abriebmaterial im Zahnträgerabschnitt des Dichtblechs. Aufgrund des vergleichsweise dünnen Zahnträgerabschnitts konnte bei entsprechenden thermischen Bewegungen der Bauteile dieser lokal vorzeitig verschleißen. Dies konnte zu einem Teilversagen des bekannten Dichtblechs führen. Die Zahnhöhe ist in Bezug auf die gesamte Dichtelementdicke nunmehr erfindungsgemäß begrenzt und zwischen beträgt 10% und 40% der Dichtelementdicke. Dadurch ist der Zahnträgerabschnitt des Dichtelements wesentlich dicker als beim bisherigen Dichtblech ausgebildet, was zu einer gesteigerten Langzeitfestigkeit und Lebensdauer des Dichtelements führt.

Im Gegensatz zu den im Querschnitt spitz zulaufenden Dichtungszähnen des aus dem Stand der Technik bekannten Dichtelements weisen die Dichtungszähne gemäß der Erfindung eine nahezu rechteckige Querschnittkontur auf, abgesehen von einem Übergangsbereich zum Zahnträgerabschnitt. Demnach weist das Dichtelement nunmehr Dichtungszähne auf, deren Zahnflanken steiler sind als beim nächstliegenden Stand der Technik. Auch sind die Dichtungszähne wesentlich schlanker ausgebildet als bisher. Wegen der steileren Zahnflanken und der schlankeren Ausbildung besitzt das Dichtelement eine verbesserte Verformbarkeit (Nachgiebigkeit) im Rifflebereich, was eine einfache Montage des plattenförmigen Dichtelements in den Bauteilnuten ermöglicht. Sollte dennoch Verschleiß auftreten, so tritt dieser zuerst bei den neuartigen Zähnen und danach erst im Zahnträgerabschnitt auf. Dies verzögert das Teilversagen des Dichtelements.

Somit unterscheidet sich das Dichtelement der erfindungsgemäßen Dichtungsanordnung vom bekannten Dichtblech darin, dass der Trägerabschnitt des Dichtelements nun steifer ist als beim bekannten Dichtblech und der Rifflebereich des Dichtelements weicher ist als beim bekannten Dichtelement. Insofern wurde in die steiferen und weicheren Bereiche folglich getauscht.

Zur Verbesserung der Dichtwirkung unabhängig von seiner relativen Zahnhöhe weisen die Dichtungszähne eine rechteckige Querschnittskontur auf, deren Teilungsabstand zueinander etwa auf das 1,6-fache der Zahnhöhe der Dichtungszähne verkleinert ist. Demnach wird ein optimaler Abstand zwischen den benachbarten Zähnen eingestellt und eine optimale Spaltdrosselung erreicht, so dass gegenüber der bekannten Ausführung eine verbessere Dichtwirkung sichergestellt wird. Darüber hinaus beträgt der mittlere Abstand zwischen zwei unmittelbar benachbarten Dichtungszähnen mindestens das 5-fache des Spalts.

Vorteilhafte Ausgestaltungen der Erfindung sind in den Unteransprüchen angegeben.

Zweckmäßigerweise beträgt die Dichtelementdicke zwischen 1,0 mm und 4,0 mm und dessen Zahnhöhe (H) zwischen 0,1 mm und 1,6 mm, insbesondere zwischen 0,3 mm und 0,7 mm.

Die Dichtungszähne des Dichtelements weisen vorzugsweise eine besondere Anpassungsfähigkeit in Form einer verbesserten Verformbarkeit auf, so dass eine einfache Montage der Dichtelemente selbst bei Übermaß weiterhin gewährleistet werden kann. Diese Anpassungsfähigkeit basiert auf den steileren Zahnflanken und schmaleren Dichtungszähnen, verglichen mit denen aus dem Stand der Technik.

Außerdem weist das Dichtelement eine besondere Nachgiebigkeit bei erhöhten Versätzen und Verformungen der benachbarten Bauteile auf, so dass das Dichtelement auch zur Abdichtung von Bauteilen mit erheblichen Versätzen und Verformungen während des Betriebs besonders geeignet ist.

Die voran beschriebene Erfindung wird anhand der nachfolgenden Figurenbeschreibung näher erläutert. Es zeigt:
- FIG 1: einen Ausschnitt eines Längsschnitts durch eine Gasturbinenanlage und
- FIG 2: den Querschnitt durch eine Dichtungsanordnung einer Gasturbinenanlage mit einem Dichtelement.

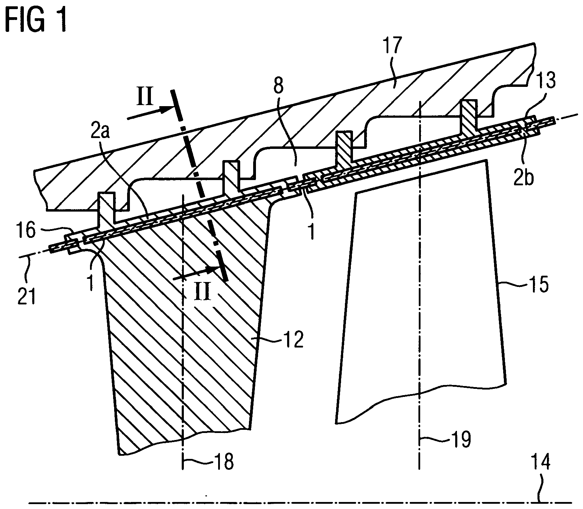

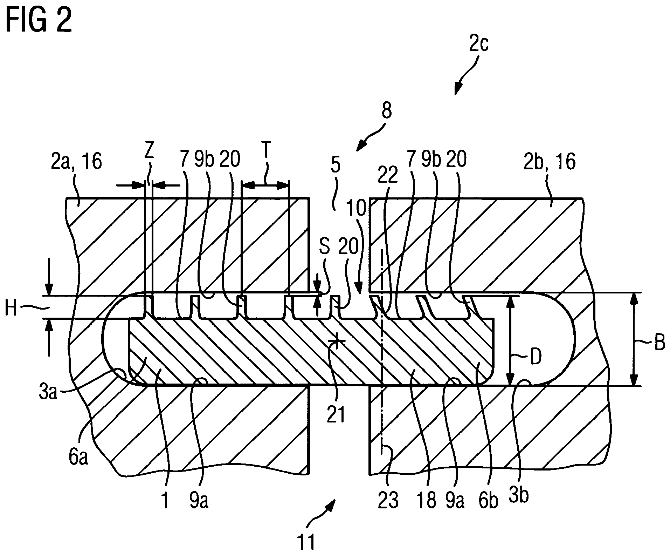

In FIG 1 ist eine entlang einer Hauptachse 14 gerichtete Gasturbinenanlage 22 dargestellt. Diese weist in einem Gehäuse 17 in axialer Richtung abwechselnd Leitschaufeln 12 und Laufschaufeln 15 auf. Die Leitschaufeln 12 sind entlang einer Achse 18 senkrecht zur Hauptachse 14 gerichtet und entlang des Umfangs der Gasturbinenanlage 22 einen Kreis bildend angeordnet. Die Leitschaufeln 12 sind über eine jeweilige Leitschaufelplatte 16 mit dem Gehäuse 17 der Gasturbinenanlage 22 verbunden. Entlang des Umfangs sind benachbarte Leitschaufeln 12 durch einen jeweiligen Spalt 5 voneinander beabstandet (s. FIG 2), wodurch diese sich weitgehend frei thermisch ausdehnen können. Die Leitschaufelplatte 16 trennt einen um die Hauptachse 14 der Gasturbinenanlage 22 gebildeten Heißgasbereich 11 von einem zwischen der Leitschaufelplatte 16 und dem Turbinengehäuse 17 gebildeten Kühlgasbereich 8. Die Laufschaufeln 15 sind entlang einer jeweiligen Hauptachse 19 gestreckt, die ebenfalls im Wesentlichen orthogonal zur Hauptachse 14 der Gasturbinenanlage stehen. Die Laufschaufeln 15 liegen vollständig in dem Heißgasbereich 11. Dieser Heißgasbereich 11 wird durch eine Mehrzahl von Wandbauteilen 13 entlang des Umfangs der Gasturbinenanlage 22 von dem Kühlluftbereich 8 getrennt. Die Wandbauteile 13 sind hierbei jeweils den Laufschaufeln 15 benachbart. Die Wandbauteile 13 sind mit dem Turbinengehäuse 17 verbunden. Der Übersichtlichkeit halber sind jeweils nur eine Leitschaufel 12, eine Laufschaufel 15 und ein Wandbauteil 13 dargestellt. In axialer Richtung ist ein jeweiliges Wandbauteil 13 von einer jeweiligen Leitschaufel 12, insbesondere der Leitschaufelplatte 16 durch einen Spalt 5 beabstandet. Dieser Spalt 5 ist durch ein Dichtelement 1 abgedichtet, wodurch weitgehend eine Strömung von Kühlgas aus dem Kühlgasbereich 8 in den Heißgasbereich 11 hinein verhindert wird. Die Leitschaufel 12 stellt hierbei ein erstes Bauteil 2a und das Wandteil 13 ein zweites Bauteil 2b dar. In Axialrichtung erfolgt somit eine Abdichtung des Kühlgasbereichs 8 von dem Heißgasbereich 11 durch Leitschaufelplatten 16 und Wandbauteilen 13 und in Umfangsrichtung jeweils eine Abdichtung zwischen benachbarten Leitschaufeln 12 und zwischen entsprechend benachbarten Wandbauteilen 13.

FIG 2 zeigt einen Schnitt entlang des Umfangs der Gasturbinenanlage 22 durch zwei benachbarte Bauteile 2a, 2b. Beide Bauteile 2a, 2b sind Teil einer Dichtungsanordnung 2c und durch einen Spalt 5 voneinander beabstandet. Die Bauteile 2a, 2b können jeweils zwei benachbarte Leitschaufeln 12, insbesondere Leitschaufelplatten 16 sowie zwei einander benachbarte Wandbauteile 13 sein. In den Bauteilen 2a, 2b ist jeweils in Umfangsrichtung eine Bauteilnut 3a bzw. 3b vorgesehen. In die Bauteilnuten 3a, 3b greift den Spalt 5 dichtend ein Dichtelement 1 ein. Das Dichtelement 1 ist entlang einer Hauptlinie 21 gerichtet und weist in dem dargestellten Querschnitt senkrecht zur Hauptlinie 21 ein erstes Ende 6a, ein zweites Ende 6b und einen dazwischen liegenden Mittelbereich 10 auf. Der Mittelbereich 10 weist zu dem Kühlgasbereich 8 hingerichtet eine Mehrzahl von Riffelnuten 7 auf, wobei zwischen benachbarten Riffelnuten 7 jeweils ein Dichtungszahn 20 gebildet ist, wodurch der Mittelbereich 10 einseitig geriffelt ist. Die Dichtungszähne 20 sind an einem Zahnträgerabschnitt 18 des Dichtelements 1 angeordnet. Jede Riffelnut 7 und jeder Dichtungszahn 20 erstreckt sich parallel zur Hauptlinie 21 und senkrecht zu einer ggf. möglichen Leckageströmung.

Die Bauteilnuten 3a, 3b weisen jeweils einander parallel gegenüberliegende Nutseitenwände 9a, 9b auf. Da in der Regel der Druck des Kühlgases höher ist als der Druck des Heißgases im heißgasführenden Bereich 11, liegt das Dichtelement 1 mit seiner glatten Oberfläche an den Seitenwänden 9a der Bauteilnuten 3a, 3b auf, so dass die Dichtungszähne 20 von einer mechanischen Belastung eher entlastet sind.

Die beiden Nutseitenwände 9a, 9b einer Bauteilnut 3a, 3b liegen dabei in einem Abstand gegenüber, welche auch als Nutbreite B bezeichnet wird. Die Nutbreite B ist maximal das 1,1-fache größer als die Gesamtdicke D des Dichtelements 1. Gemäß einer ersten Ausgestaltung beträgt die Nutbreite 2,5 mm und die Dichtelementdicke 2,4 mm.

Die Dichtungszähne 20 weisen eine Höhe H auf, welche zwischen 10% und 40% der Dichtelementdicke beträgt, beispielsweise 0,5 mm. Dies entspricht in etwa 20,8% der o.g. Dichtelementdicke. Gleichzeitig weisen die Dichtungszähne 20 aufgrund ihrer annähernd rechteckigen Querschnittskontur eine entlang ihrer Höhe nahezu unveränderte Zahnbreite Z auf. Diese liegt in der Größenordnung von etwa 0,1 bis 0,2 mm. Die Gesamtdicke D des Dichtelements 1 und die Nutbreite B sind derart aufeinander abgestimmt, dass - bei planer Anlage der glatten Seite des Dichtelements 1 an der Nutseitenwand 9a sich ein Spalt S zwischen der Dichtungszahnspitze und der anderen Seitenwand 9b der Bauteilnut 3a, 3b ausbildet - der mittlere Abstand T zwischen zwei unmittelbar benachbarten Dichtungszähnen 20 mindestens das 5-fache des Spalts S beträgt. Nach Möglichkeit sollte auch der mittlere Abstand T im Wesentlichen das 1,6-fache der Zahnhöhe H betragen. Gemäß der ersten Ausgestaltung der Dichtungsanordnung 2c weist der Spalt S ein Maß von 0,1 mm auf und der Abstand T ein Maß von 0,8 mm. Selbstverständlich müssen die Dichtungszähne 20 nicht senkrecht vom Zahnträgerabschnitt 18 abstehen. Sie können auch, wie in FIG 2 rechts dargestellt und mit dem Bezugszeichen 22 beschriftet, geringfügig gegenüber einer zum Zahnträgerabschnitt 18 Senkrechten 23 geneigt sein.

Insgesamt betrifft die Erfindung eine Dichtungsanordnung mit einem Dichtelement 1 zur Dichtung eines Spalts 5 zwischen zwei Bauteilen 2a, 2b, insbesondere einer Dichtungsanordnung 2c einer Gasturbinenanlage, welches entlang einer Hauptlinie 21 gestreckt ist und einen konturierten Querschnitt in einem geriffelten Mittelbereich 10 hat. Im Querschnitt ist das Dichtelement 1 entlang der Hauptlinie 21 gerichtet und in einer Richtung im Wesentlichen orthogonal zur Hauptlinie 21 deformierbar. Um ein verschleißbeständiges, langlebiges Dichtelement 1 mit einer besonders effizienten Sperrwirkung bereitzustellen, wird vorgeschlagen, dass die Dichtungszähne 20 der Riffelung eine rechteckige Querschnittkontur aufweisen und deren Zahnhöhe H zwischen 10% und 40% der zur Zahnhöhe H parallel erfassbaren Dichtelementdicke D beträgt. Eine ebenso effiziente Abdichtung kann erreicht werden, wenn anstelle dessen die Dichtungszähne 20 neben der rechteckigen Querschnittskontur einen Abstand T zueinander aufweisen, der ca. das 1,6-fache der mittleren Zahnhöhe H der betreffenden Dichtungszähne 20 beträgt. Die mittlere Zahnhöhe H entspricht dem arithmetischen Mittel der betrachteten Zahnhöhen.

## Patentansprüche

1. Dichtungsanordnung (2c),
umfassend zwei mechanisch oder thermisch gegeneinander bewegliche Bauteile (2a, 2b), die einander gegenüberliegend durch einen Spalt (5) voneinander beabstandet sind, wobei in den einander gegenüberliegenden Wänden der Bauteile (2a, 2b) jeweils eine Bauteilnut (3a, 3b) vorgesehen ist, in denen zur Dichtung des Spalts (5) ein plattenförmiges Dichtelement (1) angeordnet ist,
wobei die Bauteilnuten (3a, 3b) jeweils einander parallel gegenüberliegende Nutseitenwände (9a, 9b) aufweisen, die zueinander beabstandet sind durch eine Nutbreite (B), welche maximal das 1,1-fache größer ist als eine Gesamtdicke (D) des Dichtelements (1),
wobei das Dichtelement (1) entlang einer Hauptlinie (21) gerichtet ist und in einem im Wesentlichen zur Hauptlinie (21) senkrechten Querschnitt einen zwischen einem ersten Ende (6a) und einem zweiten Ende (6b) angeordneten Mittelbereich (10) mit einer ersten Oberflache aufweist, die gezahnt ist,
wobei die Quererstreckungsrichtung des plattenförmigen Dichtelements (1) zwischen den beiden Enden (6a, 6b), die in den Bauteilnuten (3a, 3b) aufgenommen sind, der Richtung des Spaltabstands entspricht,
wobei jeder Dichtungszahn (20) sich parallel zur Hauptlinie (21) und senkrecht zu einer möglichen Leckageströmung erstreckt und die Gesamtdicke (D) des Dichtelements (1) die Zahnhöhe mit einschließt, **dadurch gekennzeichnet, dass**
alle Dichtungszähne (20) eine nahezu rechteckige Querschnittskontur aufweisen und deren Zahnhöhe (H) zwischen 10% und 40% der Gesamtdicke (D) des Dichtelements (1) beträgt, dass der Abstand (T) zwischen zwei einander unmittelbar benachbarten Dichtungszähnen (20) das 1,6-fache der mittleren Zahnhöhe (H) beider Dichtungszähne (20) beträgt, und
dass der mittlere Abstand (T) zwischen zwei einander unmittelbar benachbarten Dichtungszähnen (20) des Dichtelements (1) mindestens das 5-fache der Differenz zwischen der Nutbreite (B) und der Dichtelementgesamtdicke (D) beträgt.

2. Dichtungsanordnung (2c) nach Anspruch 1,
bei der die Dichtelementgesamtdicke (D) zwischen 1,0 mm und 4,0 mm und die Zahnhöhe (H) zwischen 0,1 mm und 1,6 mm, insbesondere zwischen 0,3 mm und 0,7 mm beträgt.

3. Dichtungsanordnung (2c) nach Anspruch 1 oder 2,
bei der die Dichtungszähne (20) eine entlang ihrer Höhe nahezu unveränderte Zahnbreite (Z) aufweisen.

4. Dichtungsanordnung (2c) nach Anspruch 3,
bei der die Zahnbreite (Z) in der Größenordnung von etwa 0,1 bis 0,2 mm liegt.

## Claims

1. Sealing arrangement (2c)
comprising two components (2a, 2b) which can be moved in relation to one another as a result of mechanical or thermal action and are spaced apart opposite one another by a gap (5), wherein the mutually opposite walls of the components (2a, 2b) are each provided with a component groove (3a, 3b) in which a plate-like sealing element (1) is arranged in order to seal the gap (5),
wherein the component grooves (3a, 3b) have groove side walls (9a, 9b) which are each located opposite, and parallel, to one another and are spaced apart from one another by a groove width (B) which is at most 1.1 times greater than an overall thickness (D) of the sealing element (1),
wherein the sealing element (1) is directed along a main line (21) and, as seen in a cross section essentially perpendicular to the main line (21), has a central region (10) which is arranged between a first end (6a) and a second end (6b) and has a first surface which is toothed, wherein the direction of the transverse extent of the plate-like sealing element (1) between the two ends (6a, 6b), which are accommodated in the component grooves (3a, 3b), corresponds to the direction of the gap spacing, wherein each sealing tooth (20) extends parallel to the main line (21), and perpendicular to a possible leakage flow, and the overall thickness (D) of the sealing element (1) includes the tooth height,
**characterized in that**
all the sealing teeth (20) have a more or less rectangular cross-sectional contour and the tooth height (H) thereof is between 10% and 40% of the overall thickness (D) of the sealing element (1), **in that** the spacing (T) between two directly adjacent sealing teeth (20) is 1.6 times the average tooth height (H) of the two sealing teeth (20), and **in that** the average spacing (T) between two directly adjacent sealing teeth (20) of the sealing element (1) is at least 5 times the difference between the groove width (B) and the overall sealing-element thickness (D).

2. Sealing arrangement (2c) according to Claim 1,
in which the overall sealing-element thickness (D) is between 1.0 mm and 4.0 mm and the tooth height (H) is between 0.1 mm and 1.6 mm, in particular between 0.3 mm and 0.7 mm.

3. Sealing arrangement (2c) according to Claim 1 or 2,
in which the sealing teeth (20) have a tooth width (Z) which is more or less unchanged over their height.

4. Sealing arrangement (2c) according to Claim 3,
in which the tooth width (Z) is in the order of magnitude of approximately 0.1 to 0.2 mm.

## Revendications

1. Agencement (2c) d'étanchéité,
comprenant deux pièces (2a, 2b), mobiles l'une par rapport à l'autre mécaniquement ou thermiquement, qui sont à une distance l'une de l'autre en étant opposées l'une à l'autre par une fente (5), dans lequel, dans les parois opposées l'une à l'autre des pièces (2a, 2b) est prévue, respectivement, une rainure (3a, 3b), dans lesquelles un élément (1) d'étanchéité en forme de plaque est disposé pour rendre étanche la fente (5),
dans lequel les rainures (3a, 3b) ont chacune des parois (9a, 9b) latérales opposées, parallèles l'une à l'autre, qui sont à distance l'une de l'autre, d'une largeur (B) de rainure, qui est plus grande au maximum de 1,1 fois qu'une épaisseur (D) totale de l'élément (1) d'étanchéité, l'élément (1) d'étanchéité étant dirigé suivant une ligne (21) principale et ayant, dans une section transversale sensiblement perpendiculaire à la ligne (21) principale, une partie (10) médiane, disposée entre une première extrémité (6a) et une deuxième extrémité (6b) et ayant une première surface, qui est dentée , dans lequel la direction d'étendue transversale de l'élément (1) d'étanchéité en forme de plaque, entre les deux extrémités (6a, 6b), qui sont reçues dans les rainures (3a, 3b) des pièces, correspond à la direction de la distance de la fente, chaque dent (20) d'étanchéité s'étendant parallèlement à la ligne (21) principale et perpendiculairement à un courant de fuite éventuelle et l'épaisseur (D) totale de l'élément (1) d'étanchéité incluant la hauteur de dent, **caractérisé en ce que**
toutes les dents (20) d'étanchéité ont un contour de section transversale à peu près rectangulaire et leur hauteur (H) représente entre 10% et 40% de l'épaisseur (D) totale de l'élément (1) d'étanchéité, **en ce que** la distance (T), entre deux dents (20) d'étanchéité directement voisines, représente 1,6 fois la hauteur (H) moyenne de deux dents (20) d'étanchéité et **en ce que** la distance (T) moyenne entre deux dents (20) d'étanchéité directement voisines l'une de l'autre de l'élément (1) d'étanchéité représente au moins 5 fois la différence entre la largeur (B) de la rainure et l'épaisseur (D) totale de l'élément d'étanchéité.

2. Agencement (2c) d'étanchéité suivant la revendication 1, dans lequel l'épaisseur (D) totale de l'élément d'étanchéité est comprise entre 1,0 mm et 4,0 mm et la hauteur (H) d'une dent est comprise entre 0,1 mm et 1,6 mm, en étant notamment comprise entre 0,3 mm et 0,7 mm.

3. Agencement (2c) d'étanchéité suivant la revendication 1 ou 2,
dans lequel les dents (20) d'étanchéité ont une largeur (Z) à peu près inchangée le long de leur hauteur.

4. Agencement (2) d'étanchéité suivant la revendication 3, dans lequel la largeur (Z) de dent est de l'ordre de grandeur d'environ 0,1 à 0,2 mm.
